# EUROPÄISCHE PATENTSCHRIFT

(11) **EP 0 359 853 B1**
(45) Veröffentlichungstag und Bekanntmachung des Hinweises auf die Patenterteilung: **03.02.1993**
(21) Anmeldenummer: 88115493.4
(22) Anmeldetag: 21.09.1988
(51) Int. Cl.: H02K 7/20, H02K 23/66

(54) **Elektromotorischer Antrieb, insbesondere Verstellantrieb für ein Kraftfahrzeug**
Electromotor drive, in particular driving servo for a vehicle
Entraînement à moteur électrique en particulier servo d'entraînement pour un véhicule

(43) Veröffentlichungstag der Anmeldung: 28.03.1990
(73) Patentinhaber: SIEMENS AKTIENGESELLSCHAFT, 80333 München (DE)
(72) Erfinder: Maxa, Vladimir, Dipl.-Ing., D-8700 Würzburg (DE); Michel, Peter, Dipl.-Ing. (FH), D-8702 Kleinrinderfeld (DE); Winter, Udo, Dr.-Ing., D-8702 Kürnach (DE)

(56) Entgegenhaltungen:
- EP-A- 0 133 527
- EP-A- 0 259 025
- FR-A- 2 580 439
- FR-A- 2 590 746

## Beschreibung

Die Erfindung bezieht sich auf einen elektromotorischen Antrieb, insbesondere Verstellantrieb für ein Kraftfahrzeug gemäß Oberbegriff des Anspruchs 1 oder 3; ein derartiger Antrieb entspricht z.B. der in der FR-A-2 590 746 bzw. DE-A1-35 41 639 beschriebenen Art.

Um bei elektromotorischen Verstellantrieben in einem Kraftfahrzeug, insbesondere bei elektromotorisch angetriebenen Fensterhebern oder Schiebedächern, z.B. für einen wirksamen Einklemmschutz die genaue Motordrehzahl und/oder Motordrehrichtung erfassen zu können, ist bereits vorgeschlagen worden, einen Tachogenerator an einen drehenden Teil, insbesondere die Motor-bzw. Getriebewelle des Verstellantriebes, vorzugsweise als externes Bauteil anzukoppeln.

Durch die eingangs genannte FR-A-2 590 746 ist eine Einrichtung zur annäherungsweisen Konstanthaltung eines Universalmotors bekannt, bei dem einem vor der Stirnseite des Kommutator auf der Rotorwelle befestigten Magnetring statorseitig ein in einem gesonderten einsteckbaren Gehäuse angeordneter Impulsgeber mit einer Hallsonde und einer nachgeschalteten Auswerteschaltung zugeordnet ist.

Durch die FR-A-2 580 439 bzw. die DE-A1-35 13 155 ist weiterhin ein Kommutatormotor-Antrieb mit einem vor dem Kommutator auf der Rotorwelle als Teil einer Regelelektronik befestigten Tachomagneten und einer diesem statorseitig zugeordneten Magnetspule bekannt, die auf einer Leiterplatte befestigt ist, die ihrerseits im Lagerschild des Motors gehalten ist und auf der auch den Kommutator beschleifende Kohlebürsten kontaktiert und gehalten sind.

Gemäß Aufgabe vorliegender Erfindung soll bei einem elektromotorischen Antrieb, insbesondere Verstellantrieb für ein Kraftfahrzeug, auf einfache und betriebssichere Weise die jeweilige Drehzahl und/oder Drehrichtung des antreibenden Kommutatormotors erfaßt werden können. Diese Aufgabe wird bei einem elektromotorischen Verstellantrieb der eingangs genannten Art erfindungsgemäß durch die Merkmale des Anspruchs 1 oder 3 gelöst; vorteilhafte Ausgestaltungen der Erfindung sind jeweils Gegenstand der Unteransprüche.

Die erfindungsgemäße Integration der für die Drehzahl- und/oder Drehrichtungserkennung notwendigen ruhenden Bauteile in Form von Hall-Sensoren auf der an sich vorhandenen Bürstenhalterung und der rotierenden Bauteile in Form von magnetischen Polen eines auf die Rotorwelle bis in Nähe des Kommutators axial aufpressbaren Polrades erübrigt besondere Haltebauteile und Gehäusebauteile für die Drehzahl-und/oder Drehrichtungserkennung und ist in der Regel ohne aufwendige spezifische Konstruktionsanpassung der mitbenutzten Bauteile sowie mit geringem Fertigungs- und Montageaufwand durchführbar, wobei eine hinreichende Feuchtigkeitsabdichtung durch die Verlegung der Bauteile in das mit dem geschlossenen Getriebegehäuse feuchtigkeitsdicht verbundene Motorgehäuse ebenfalls ohne zusätzlichen Aufwand mit Sicherheit gewährleistet werden kann.

Bei einer durch die DE-A1-33 29 120 bekannten Bauart eines Kraftfahrzeug-Fensterheberantriebs mit einem kommutatorseitig mit offener Stirnseite an ein Getriebegehäuse dicht schließend angeflanschten Statorgehäuse des antreibenden Kommutatormotors kann sogar ohne zusätzlichen Aufwand hinsichtlich der bereits vorhandenen Bauteile des Verstellantriebes mit einfachen Mitteln eine Nachrüstung zur Erfassung der Motordrehzahl bzw. Motordrehrichtung dadurch erreicht werden, daß das magnetische Polrad außen vor der getriebegehäusigen Stirnseite des Kommutators durch axiales Aufdrücken auf die Rotorwelle vorgelagert wird und die Hall-Sensoren z.B. nachträglich auf dem Bürstenhalterungssystem befestigt werden.

Die Erfindung sowie weitere vorteilhafte Ausgestaltungen werden im folgenden anhand eines schematisch dargestellten Ausführungsbeispiels in der Zeichnung näher erläutert; darin zeigen:
- FIG 1: einen axialen Längsschnitt durch eine Motor-Getriebeeinheit eines Kraftfahrzeug-Fensterheberantriebs gemäß Schnittverlauf I-I in FIG 2,
- FIG 2: eine axiale Draufsicht auf den Statorteil des in FIG 1 dargestellten Kommutatormotors gemäß Blickrichtung II-II,
- FIG 3: eine axiale Draufsicht auf ein einteiliges Kunststoff-Polrad mit kunststoffgebundenen magnetisierten Ferrit-Partikeln.

Der Stator 1 des antreibenden Kommutatormotors besteht im wesentlichen aus einem topfförmigen, an der rechten Stirnseite offenen Statorgehäuse 11 und an dessen Innenumfang gehaltenen Permanent-Erregermagneten 12; der Rotor 2 des Kommutatormotors besteht im wesentlichen aus einer Rotorwelle 21 und darauf befestigtem bewickelten Bleckpaket 23 und mit der Wicklung des Blechpaketes verbundenem, auf der Rotorwelle 21 gehalterten Kommutator 22.

Das Statorgehäuse 11 ist an seiner rechten stirnoffenen Seite über Schrauben allseitig dicht an ein Getriebegehäuse 7 eines Schneckengetriebes angeflanscht. Die Rotorwelle 21 ragt mit einem überstehenden Ende in das Getriebegehäuse 7 ein und kämmt mit ihrem als Schneckenwelle 71 ausgebildeten überstehenden Ende mit einem Schneckenrad 72, das in hier nicht näher dargestellter Weise über einen Seilzug- oder einen Scherentransport das Fenster in einer Kraftfahrzeugtür höhenverstellbar antreibt.

Die am äußeren Umfang des Kommutators 22 angeordneten Kommutatorlamellen werden in hier nicht näher dargestellter Weise von Bürsten 31,31 kontaktiert, die in an sich bekannter Weise in einer am axialen Ende der offenen Stirnseite des topfförmigen Statorgehäuses 11 angeordneten Bürstenhalterung 3 gehalten sind.

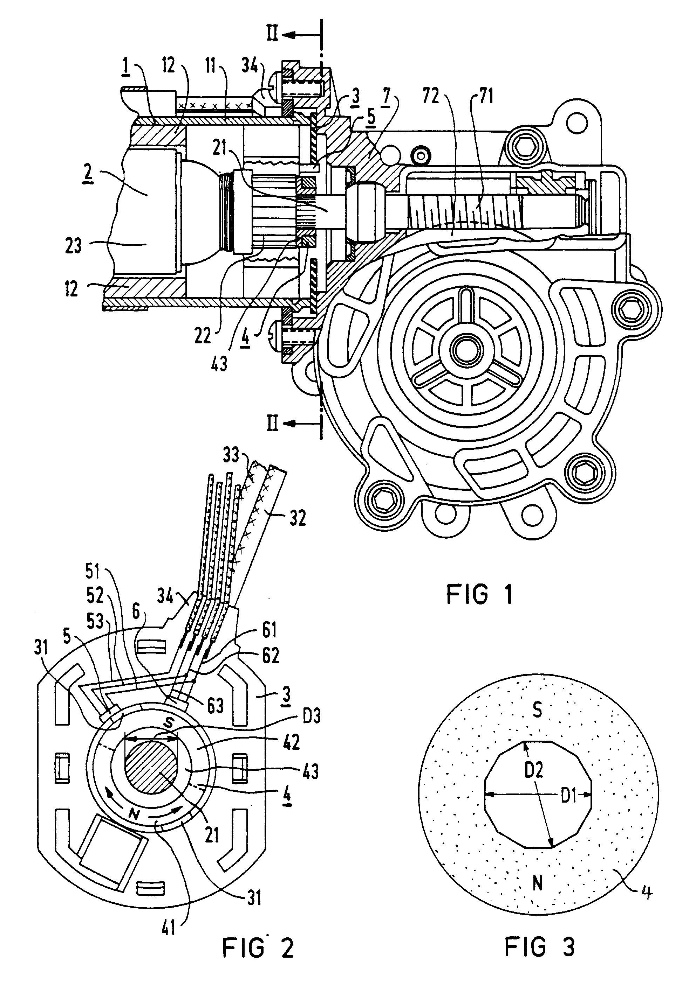

Zur Drehzahlerfassung sind - wie insbes. aus Fig. 2 ersichtlich - auf der an sich vorhandenen Bürstenhalterung 3 zwei Hall-Sensoren 5,6 befestigt, denen radial fluchtend ein auf der Rotorwelle 21 befestigtes magnetisches Polrad 4 gemäß FIG 1,2 bzw. Polrad 8 gemäß FIG 3 mit zwei entgegengesetzt magnetischen Polen 41,42 zugeordnet ist. Das mehrteilige Polrad 4 besteht gemäß FIG 1,2 aus einem auf die Rotorwelle 21 axial aufgedrückten Kunststoffträger 43 und von dem Kunststoffträger 43 aufgenommenen Polstücken 41,42.

FIG 3 zeigt in weiterer konstruktiver und fertigungstechnischer Vereinfachung in vergrößerter Darstellung ein einteiliges Polrad 8, bestehend aus einem auf die Rotorwelle 21 axial aufgepreßten Kunststoffkörper mit kunststoffgebundenen Ferrit-Teilchen, das im Sinne einer zweipoligen Erregung (N,S) magnetisiert ist. Zum besonders festen und doch mit geringem Montageaufwand erzielbaren Preßsitz des axial auf die Rotorwelle 21 aufgedrückten wellenseitigen Kunststoffteils des Polrades ist für dessen Wellenbohrung eine von der Rundform abweichende Vielkantform, z.b. Zwölfkantform mit einem minimalen Durchmesser D1 kleiner und einem maximalen Durchmesser D2 größer als der Durchmesser D3 der Rotorwelle (21) vorgesehen. Zusätzlich kann zur weiteren Verdrehsicherung auf der Rotorwelle 21 noch eine Riffelung vorgesehen sein.

In vorteilhafter Weise sind die äußeren Anschlußleitungen 51-53; 61-63 der Hall-Sensoren 5; 6 zusammen mit den äußeren Anschlußleitungen 32, 33 der Bürsten auf der Bürstenhalterung über eine gemeinsame isolierte Leitungsdurchführung 34 von der Bürstenhalterung 3 aus dem Statorgehäuse 11 des Kommutatorgehäuses nach außen herausgeführt.

## Patentansprüche

1. Elektromotorischer Antrieb, insbesondere Verstellantrieb für ein Kraftfahrzeug, mit einem Kommutatormotor mit einem auf dessen Rotorwelle (21) befestigten Kommutator (22) und einer innerhalb dessen Statorgehäuses (11) befestigten Bürstenhalterung (3) sowie einem statorseitigen, an eine Drehzahl-Auswertevorrichtung anschließbaren Hall-Sensor (5 bzw. 6) mit einem auf der Rotorwelle (21) angeordneten, dem Hall-Sensor (5 bzw. 6) zugeordneten magnetischen Polrad (4), **dadurch gekennzeichnet,** daß der Hall-Sensor (5 bzw. 6) auf der Bürstenhalterung (3) des Kommutatormotors angeordnet und das magnetische Polrad (4) mit einer von der Rundform abweichenden Vielkant-Wellenbohrung, deren minimaler Durchmesser (D1) kleiner und deren maximaler Durchmesser (D2) größer als der Durchmesser (D3) der Rotorwelle (21) ist, außen vor die getriebegehäuseseitige Stirnseite des Kommutators (22) auf die Rotorwelle (21) angeordnet ist.

2. Elektromotorischer Antrieb nach Anspruch 1 ,
**dadurch gekennzeichnet,** daß das magnetische Polrad (4) aus einem Kunststoffkörper mit kunststoffgebundenen Magnet-Partikeln besteht (FIG 3).

3. Elektromotorischer Antrieb, insbesondere Verstellantrieb für ein Kraftfahrzeug, mit einem Kommutatormotor mit einem auf dessen Rotorwelle (21) befestigten Kommutator (22) mit am Umfang eines Isolier-Tragkörpers (43) gehaltenen Lamellen, und einer innerhalb dessen Statorgehäuses (11) befestigten Bürstenhalterung (3) sowie einem statorseitigen, an eine Drehzahl-Auswertevorrichtung anschließbaren Hall-Sensor (5 bzw. 6) mit einem auf der Rotorwelle (21) angeordneten, dem Hall-Sensor (5 bzw. 6) zugeordneten magnetischen Polrad (4), **dadurch gekennzeichnet,** daß der Hall-Sensor (5 bzw.6) auf der Bürstenhalterung (3) des Kommutatormotors angeordnet und ein einstückiger Isolier-Tragkörper (43) sowohl für die Lamellen des Kommutators (22) als auch zur Aufnahme von axial außen vorgelagerten Polstücken (41,42) des magnetischen Polrades (4) vorgesehen ist.

4. Elektromotorischer Antrieb nach einem der Ansprüche 1 bis 3, **dadurch gekennzeichnet,** daß die äußeren Anschlußleitungen (51-53; 61-63) des Hall-Sensors (5 bzw.6) zusammen mit den äußeren Anschlußleitungen (32,33) des Bürstenhalterung (3) über eine gemeinsame isolierte Leitungsdurchführung (34) aus dem Statorgehäuse (11) des Kommutatormotors (3) herausgeführt sind.

5. Elektromotorischer Antrieb für einen Kraftfahrzeug-Fensterheberantrieb nach einem der Ansprüche 1 bis 4, **dadurch gekennzeichnet,** daß der Ausgang der Auswertevorrichtung in Schaltabhängigkeit mit einem Einklemmschutz für den Fensterheberantrieb gestellt ist.

## Claims

1. Electromotor drive, in particular adjusting drive for a motor vehicle, having a commutator motor with a commutator (22) fastened to its rotor shaft (21) and a brush holder (3) fastened within its stator housing (11) as well as a stator-side Hall sensor (5 and 6) connectable to a speed evaluating device with a magnetic rotor (4) arranged on the rotor shaft (21) and associated with the Hall sensor (5 and 6), characterized in that the Hall sensor (5 and 6) is arranged on the brush holder (3) of the commutator motor and the magnetic rotor (4) with a many sided undulate opening deviating from the round shape is axially pressed on to the rotor shaft (21) on the outside in front of the front side of the commutator (22) which is on the side of the gearing housing, the minimum diameter (D1) of the opening being smaller than the diameter (D3) of the rotor shaft (21) and the maximum diameter (D2) of the opening being larger than the diameter (D3) of the rotor shaft (21).

2. Electromotor drive according to claim 1, characterized in that the magnetic rotor (4) consists of a plastics body with plastics-bonded magnet particles (Figure 3).

3. Electromotor drive, in particular adjusting drive for a motor vehicle, having a commutator motor with a commutator (22) fastened to its rotor shaft (21) with laminations held on the circumference of an insulating carrying body (43), and a brush holder (3) fastened within its stator housing (11) as well as a stator-side Hall sensor (5 and 6) connectable to a speed evaluating device with a magnetic rotor (4) arranged on the rotor shaft (21) and associated with the Hall sensor (5 and 6), characterized in that the Hall sensor (5 and 6) is arranged on the brush holder (3) of the commutator motor and a one-piece insulating carrying body (43) is provided both for the laminations of the commutator (22) and for the incorporation of pole pieces (41,42) of the magnetic rotor (4) which are axially extended in front on the outside.

4. Electromotor drive according to one of claims 1 to 3, characterized in that the external connection leads (51-53; 61-63) of the Hall sensor (5 and 6) are led out of the stator housing (11) of the commutator motor (3) together with the external connection leads (32,33) of the brush holder (3) by way of a common insulated lead bushing (34).

5. Electromotor drive for a motor-vehicle window-lifter drive according to one of claims 1 to 4, characterized in that the output of the evaluating device is placed in switching dependency with a clamping protection for the window-lifter drive.

## Revendications

1. Dispositif d'entraînement à moteur électrique, notamment dispositif d'entraînement de réglage pour un véhicule automobile, comportant un moteur possédant un collecteur (22) fixé à l'arbre (21) du rotor du moteur, et un porte-balais (3) fixé à l'intérieur du carter (11) du stator du moteur, ainsi qu'un capteur de Hall (5 ou 6) situé côté stator et pouvant être raccordé à un dispositif d'évaluation de la vitesse de rotation, avec une roue polaire magnétique (14) montée sur l'arbre (21) du rotor et associée au capteur de Hall (5 ou 6), caractérisé par le fait que le capteur de Hall (5 ou 6) est disposé sur le porte-balais (3) du moteur à collecteur et que la roue polaire magnétique (4) est axialement emmanchée à force, à partir de l'extérieur, sur l'arbre (21) du rotor, sur la face frontale, située du côté du carter de transmission, du collecteur (22), par un perçage d'arbre, dont la section polygonale diffère de la forme circulaire et dont le diamètre minimum (D1) est inférieur et le diamètre maximum (D2) est supérieur au diamètre (D3) de l'arbre (21) du rotor.

2. Dispositif d'entraînement à moteur électrique suivant la revendication 1, caractérisé par le fait que la roue polaire magnétique (4) est constituée par un corps en matière plastique contenant des particules magnétiques liées par la matière plastique (figure 3).

3. Dispositif d'entraînement à moteur électrique, notamment dispositif d'entraînement de réglage pour un véhicule automobile, comportant un moteur possédant un collecteur (22) fixé sur l'arbre (21) du rotor du moteur et comportant des lamelles maintenues sur le pourtour d'un corps isolant de support (43), et un porte-balais (3) fixé à l'intérieur du carter (11) du stator du moteur, ainsi qu'un capteur de Hall (5 ou 6) situé côté stator et pouvant être raccordé à un dispositif d'évaluation de la vitesse de rotation, avec une roue polaire magnétique (4) montée sur l'arbre (21) du rotor et associée au capteur de Hall (5 ou 6), caractérisé par le fait que le capteur de Hall (5 ou 6) est disposé sur le porte-balais (3) du moteur à collecteur et qu il est prévu un corps isolant de support monobloc (43) aussi bien pour les lamelles du collecteur (22) que pour le logement de pièces polaires (41,42), montées extérieurement axialement en avant, de la roue polaire magnétique (4).

4. Dispositif d'entraînement à moteur électrique suivant l'une des revendications 1 à 3, caractérisé par le fait que les conducteurs extérieurs de raccordement (51-53; 61-63) du capteur de Hall (5 ou 6) sont ressortis, conjointement avec les conducteurs extérieurs de raccordement (32,33) du porte-balais (3), par l'intermédiaire d'une traversée isolée commune (34), hors du carter (11) du stator du moteur à collecteur (3).

5. Dispositif d'entraînement à moteur électrique pour un dispositif de lève-glace de véhicule automobile suivant l'une des revendications 1 à 4, caractérisé par le fait que la sortie du dispositif d'évaluation et pourvue, en fonction de la commutation, d'un dispositif de protection à pince pour le dispositif d'entraînement de lève-glace.
